Europäisches Patentamt

European Patent Office

Office européen des brevets

(11) Veröffentlichungsnummer: **0 221 440**
**A2**

(12) **EUROPÄISCHE PATENTANMELDUNG**

(21) Anmeldenummer: 86114579.5

(22) Anmeldetag: 21.10.86

(51) Int. Cl.⁴: **B29C 71/02 , B29C 53/18**

(30) Priorität: 07.11.85 DE 3539500

(43) Veröffentlichungstag der Anmeldung:
13.05.87 Patentblatt 87/20

(84) Benannte Vertragsstaaten:
DE FR GB

(71) Anmelder: HOECHST AKTIENGESELLSCHAFT
Postfach 80 03 20
D-6230 Frankfurt am Main 80(DE)

(72) Erfinder: Seibel, Markus, Dr. Dipl.-Chem.
Am Rosengarten 16
D-6500 Mainz(DE)

(54) Verfahren und Vorrichtung zur Verminderung von Ungleichmässigkeiten und zur Dimensionsstabilisierung von thermoplastischen Folienbahnen.

(57) Die Erfindung betrifft ein Verfahren zur Vergleichmäßigung und/oder zur Dimensionsstabilisierung von thermoplastischen Folienbahnen nach der Herstellung und/oder Lagerung, wobei man man die Folienbahn durch eine Vorwärmzone mit der Temperatur $t_1$, dann durch eine Heizzone mit den Temperaturen $t_2$ und $t_3$ und anschließend durch eine Abkühlzone mit der Temperatur $t_4$ führt, wobei man die Temperaturbedingungen derart einstellt, daß $t_1 \leq t_2$ und $t_3$; $t_3 \geq t_2$ und $t_4 \leq t_2$ und $t_3$ ist, wobei $t_2$ und $t_3$ bei der Vergleichmäßigung in der Nähe ($\pm$ 10 °C) des Erweichungspunktes $t_g$ des Folienmaterials liegen und bei der Dimensionsstabilisierung $t_3$ 20 bis 70 °C $\geq t_2$ gehalten wird und eine Verweilzeit in der Heizzone $t_2$, $t_3$ von 1 bis 30 sec eingehalten wird.

Die Erfindung betrifft auch verschiedene Vorrichtungen zur Durchführung des Verfahrens, die eine Vorheizwalze sowie getrennte Heiz- und Kühleinrichtungen enthalten.

Fig.2

EP 0 221 440 A2

## Verfahren und Vorrichtung zur Verminderung von Ungleichmäßigkeiten und zur Dimensionsstabilisierung von thermoplastischen Folienbahnen

Die vorliegende Erfindung betrifft die Verminderung bzw. die weitgehende Beseitigung von Ungleichmäßigkeiten bzw. die Herstellung einer weitgehenden Dimensionsstabilität von thermoplastischen Folienbahnen nach ihrer Herstellung und gegebenenfalls ihrer Lagerung.

Die Erfindung bezieht sich auch auf zur Durchführung des Verfahrens brauchbare Vorrichtungen.

Unter Ungleichmäßigkeiten sind im folgenden z. B. Wellen, Durchhänge, Sternbildung, Verdehnungen, Falten und Druckstellen zu verstehen, d.h., daß die verschiedenen Bereiche der thermoplastischen Folien ein ungleichmäßiges Erscheinungsbild aufweisen.

Unter Dimensionsstabilität ist zu verstehen, daß auch bei Erwärmung und/oder Lagerung die Folie keine oder nur sehr geringfügige Dimensionsänderungen erfährt.

Bereits bei der Herstellung von thermoplastischen Folien treten -insbesonders bei Flachfolien - Abweichungen von der theoretisch idealen Form auf. So sind stets Dickenunterschiede zu beachten, die in Form von Streifen in Längsrichtung zu beobachten sind.

Diese Streifenbildung, die auch durch Streckvorgänge nicht zu beseitigen ist, ist durch minimale Unterschiede in der Ausbildung der Düsenlippen, durch Unebenheiten auf der Abzugswalze oder den Folgewalzen sowie einer nicht völlig gleichmäßig einstellbaren Temperatur während des Herstellungsprozesses bedingt. Durch die sogenannten "neck-in" beim Abziehen der heiß auf die Abzugswalze auflaufenden Schmelzen wird weiterhin die Planlage verschlechtert.

Die genannten Foliendefekte können auch durch eine in vielen Herstellungsverfahren angewendete Thermofixierung, d.h. eine Wärmebehandlung (nach meist durchgeführten Streckvorgängen), nicht beseitigt werden. Bei dem auf die Herstellung in den meisten Fällen folgenden Aufwickelprozeß sind die Fehler, vor allem die Dickenunterschiede, der Grund für das verstärkte Auftreten weiterer Fehler. Das Aufwickeln muß bei einer bestimmten Wickelspannung erfolgen, da sonst die Rollen keine Festigkeit besitzen und seitlich teleskopieren, wodurch sie für die Weiterbearbeitung -z.B. Beschichtungen oder Schneidevorgänge -weitgehend unbrauchbar sind.

Ein zu festes Wickeln führt zu Verprägungen der Folienbahnen, da die Dickstellen, die sich oft über mehrere tausend Meter gradlinig erstrecken, übereinandergewickelt werden und sich so gegenseitig beeinflussen. Diese Verprägungen treten in der Nähe des Wickelkernes besonders auf. Bei der Lagerung der Rollen auftretende Temperaturänderungen erzeugen Dimensionsänderungen in der Folienbahn, die zu Sternbildung, Druckstellen und Verdehnungen führen. Man hat deshalb versucht, beim Aufwickeln die Folienbahnen in ihrer Führung zu changieren, damit die Dickstellen gegeneinander verschoben zum Übereinanderliegen kommen.

Auch mit einem erheblichen apparativen Aufwand, der gesamten Bahnführung (zum Teil Bahnbreiten von 5 m und mehr) eine seitliche, changierende Bewegung zu erteilen, können durch das gekreuzte Übereinanderlegen der Dickstellen die Verprägungen nicht vermieden werden. Sie werden durch diese Verfahren nur flacher.

Um die bei der Aufwicklung zusätzlich entstehenden Ungleichmäßigkeiten weitgehend auszuschalten, hat man gemäß der US-A 3 502 765 eine frei geführte Kunststofffolienbahn lokal entlang ihrer Bahnkanten so erwärmt, daß dort eine Schrumpfung einsetzt, wodurch Verwerfungen auftreten.

Gemäß der BE-A 764 289 hat man versucht, Fremdmaterialien, wie Wachsabmischungen, in die Rollen mit einzuwickeln.

Die FR-A 2 110 951 beschreibt ein Verfahren, bei dem man während der Aufwicklung Streifen oder Fäden mit einlaufen läßt.

Schließlich ist es aus der DE-A 23 44 679 bekannt, daß man bei der Herstellung der Folien an den Rändern Verprägungen anbringt.

Allen diesen Verfahren ist gemeinsam, Abstandshalter zwischen die einzelnen Folienlagen zu bringen, um das die Verprägungen erzeugende Übereinanderliegen der Dickstellen zu vermeiden bzw. um Verschiebungen der einzelnen Folienlagen gegeneinander zu ermöglichen. Durch diese Verfahren können die durch das Wickeln entstehenden Fehler in der Folienbahn vermindert werden, eine Verminderung oder weitgehende Beseitigung der bei der Herstellung der Folienbahnen entstehenden Fehler (Planlagefehler, Streifenbildung) ist jedoch nicht zu erreichen.

Aufgabe der Erfindung war es nun, ein Verfahren zu entwickeln, durch das die bei der Herstellung und/oder Wicklung und/oder Lagerung entstehenden Defekte in der Folienbahn weitgehend beseitigt oder sehr stark vermindert werden können und darüber hinaus noch eine Dimensionsstabilisierung ermöglicht wird.

Gelöst wird die vorstehend genannte Aufgabe durch ein Verfahren zur Vergleichmäßigung und/oder Dimensionsstabilisierung einer thermoplastischen Folienbahn nach deren Herstellung und/oder Lagerung, dessen kennzeichnendes Merkmal darin besteht, daß man die Folienbahn durch eine Vorwärmzone mit der Temperatur $t_1$, dann durch eine Heizzone mit den Temperaturen $t_2$ und $t_3$ und anschließend durch eine Abkühlzone mit der Temperatur $t_4$ führt, wobei man die Temperaturbedingungen derart einstellt, daß $t_1 \leq t_2$ und $t_3$; $t_3 \geq t_2$ und $t_4 \leq t_2$ und $t_3$ ist, wobei $t_2$ und $t_3$ bei der Vergleichmäßigung in der Nähe ($\pm 10$ °C) des Erweichungspunktes $t_g$ des Folienmaterials liegen und bei der Dimensionsstabilisierung $t_3$ 20 bis 70 °C $\geq t_2$ gehalten wird und eine Verweilzeit in der Heizzone $t_2$, $t_3$ von 1 bis 30 sec eingehalten wird.

Durch das erfindungsgemäße Verfahren können die eingangs geschilderten Ungleichmäßigkeiten sehr stark vermindert und zum Teil sogar weitgehend beseitigt werden. Gleichzeitig ist das erfindungsgemäße Verfahren auch dafür geeignet, den zu behandelnden Folienbahnen weitgehende Dimensionsstabilität zu vermitteln.

Die Erfindung betrifft auch geeignete Vorrichtungen zur Durchführung des Verfahrens.

Eine Vorrichtung besteht aus einer drehbaren, beheizbaren Führungstrommel 1 oder aus einem feststehenden, Öffnungen aufweisenden Tragrohr 1A sowie Umlenkwalzen 2 und 3 für die Folie F, deren kennzeichnendes Merkmal darin besteht, daß die Walze 2 als Heizwalze ausgebildet ist und oberhalb der Trommel 1 oder des Tragrohres 1A eine Heizeinrichtung 4 und -in Laufrichtung der Folie gesehen -nachgeschaltet eine Kühleinrichtung 5 vorhanden ist.

In bevorzugter Ausführung bestehen die Einrichtungen 4 und 5 aus Düsenaggregaten, die mit Mitteln verbunden sind, die Heiß-und Kaltgase in diese einführen. Dabei können selbstverständlich die Düsenaggregate 4 auch wahlweise gegen wenigstens einen IR-Strahler ausge tauscht werden, gegebenenfalls können die Einrichtungen auch zusammengeschaltet sein.

Bei Wahl des Tragrohrs 1A ist dieses so ausgebildet, daß es zwei Segmente S1 und S2 enthält, in die Heißgas (z.B. Luft) bei S1 bzw. Normal-oder Kaltgas (z.B. Luft) bei S2 eingebracht wird. Dabei soll das Segment S1 größer sein als das Segment S2.

Um die Heiz-und/oder Kühlzone voneinander weitgehend zu trennen, sollen die Einrichtungen 4 und 5 möglichst etwas räumlich getrennt sein, damit sie sich nicht gegenseitig in ihrer Temperatur stören.

Es ist auch sehr zweckmäßig, bei Verwendung des Tragrohrs 1A die Einrichtungen 4 und 5 derart auszugestalten, daß sie in ihren Abmessungen den Segmenten S1 und S2 angepaßt sind.

In manchen Fällen ist auch vorgesehen, daß die Walze 3 als Kühlwalze ausgebildet ist, um eine zusätzliche Abkühlung, vor allem bei schnellaufendem Transport der Folienbahn, herbeizuführen. Es ist jedoch auch möglich, auf die Kühleinrichtung 5 zu verzichten und nur die Kühlwalze 3 als Abkühlstrecke zu benutzen, was jedoch nur bei relativ langsamer Fahrweise zweckmäßig ist.

Die Wahl der Ausgestaltung hängt von dem zu behandelnden Folienmaterial, der Umschlingung, den Temperatureinstellungen in den einzelnen Teilen und der Abzugsgeschwindigkeit ab.

Die Verwendung des Tragrohrs 1A ist dann bevorzugt, wenn neben der Beseitigung der Unregelmäßigkeiten auch eine hohe Dimensionsstabilität erreicht werden soll.

Eine alternative Vorrichtung besteht in einer gestreckten Konstruktion, in der die Folie F sinusförmig durch ein Düsenaggregat geführt wird, nachdem sie die Vorheizwalze 2 verlassen hat. In der als zweiteiliges Düsenaggregat ausgebildeten Heizeinrichtung 4 wird die Folie F aufgeheizt und in der als zweiteiliges Düsenaggregat ausgebildeten Kühleinrichtung 5 die Folie gekühlt, bevor sie auf die Walze 3 und die Zugspannungsregelung läuft. Selbstverständlich können in der Heizeinrichtung auch IR-Strahler zugeschaltet sein. Bei Verwendung dieser Vorrichtung muß darauf geachtet werden, daß der Gasdruck so auf die Zugspannung abgestimmt wird, daß einerseits keine Berührung mit den Düsenaggregaten erfolgt und andererseits die Bahn die Form einer Sinuswelle beibehält.

Der Vorteil der Vorrichtung mit gestreckter Führung der Folie besteht darin, daß besonders geringe Bahnspannungen eingestellt werden können, was zur Erzielung hoher Dimensionsstabilität von besonderer Bedeutung ist. Die Bahnspannung sollte dabei im Bereich von 0,1 bis 1,0 kg/m Bahnbreite liegen.

Ein weiterer, großer Vorteil der Vorrichtungen, die mit Tragluft arbeiten, besteht darin, daß der Übergang aus der Heizzone in die Kühlzone unmittelbar und vollständig möglich ist, weil das Gas beidseitig heizend und kühlend einwirkt. Es ergeben sich somit insbesondere bei dickeren Folien keine unerwünschten Temperaturgradienten, die z.B. zu einem unterschiedlichen Kristallisationsgefüge führen würden.

Bei dickeren Folien sind die Ausführungen mit Traggas den Ausführungen mit der Trommel auf jeden Fall vorzuziehen, da die beheizte Trommel auch in der Kühlzone läuft. Somit stellt sich bei dickeren Folien ein Temperaturgradient über deren Dicke ein. Außerdem wirkt die Reibung auf der Trommel der Einstellung der Dimensionsstabilität entgegen. Um bei der Trommelausführung in der Kühlzone trotzdem eine Abkühlung unter die Um-

wandlungstemperatur $t_g$ zu erreichen, darf die Trommeloberfläche nicht wesentlich mehr als etwa 10 bis 30°C über der Umwandlungstemperatur liegen. Dadurch ist bei Verwendung einer beheizten Trommel als Tragelement eine Dimensionsstabilisierung der Folie für die hohen Temperaturen ($\geqq$ 100 °C im Fall von Polyethylenterephthalatfolien) nicht ohne weiteres möglich.

Die berührungslose Führung über dem Tragrohr wird erreicht durch Einstellung einer geeigneten Bahnzugspannung (0,1 bis 1 kg/m Bahnbreite), durch Wahl der Gasmenge und des Gasdrucks und gegebenenfalls durch Ausgestaltung der Öffnungen (Schlitze, Löcher und Kombinationen davon).

Bei Wahl der Tragluftausführung ist die Temperatur der Luft in der Heizzone einerseits von Einfluß auf die not wendige Verweildauer, andererseits auf die erzielbare Dimensionsstabilität. Will man nur eine Folie mit guter Planlage erreichen, so genügt es bei einer Temperatur, die nur wenig oberhalb von $t_g$ liegt zu arbeiten (z.B. ca. 80 bis 100 °C bei Polyesterfolien).

Soll jedoch eine Folie mit sowohl guter Planlage als auch hoher Dimensionsstabilität erreicht werden, müssen höhere Temperaturen und Verweilzeiten angewendet werden (beispielsweise 120 bis 130 °C bei 3 bis 15 sec).

In beiden Fällen ist es wichtig, die Folie in der Kühlzone unter die Erweichungstemperatur $t_g$ herunterzukühlen und erst dann über eine Walze oder dgl. vom Tragrohr wegzuführen.

Bei Wahl der Trommelausführung soll die Temperatur der Trommel bei etwa $t_g$ liegen, wobei Temperaturen von $t_g$ und ca. 10 bis 30 °C angewendet werden. Die Temperatur in der Heizzone soll wenigstens auf den Wert von $t_g$ der jeweiligen Folie eingestellt werden, wobei Werte von oberhalb $t_g$ bevorzugt sind. Die Verweilzeiten in der Heizzone liegen dabei zwischen 1 bis 10 sec und sind abhängig von dem zu behandelnden Material, der Luftpolsterstrecke, dem Umschlingungswinkel und den angewendeten Temperaturen.

Die Erfindung wird anhand der folgenden Beispiele näher erläutert, ohne jedoch auf die gezeigten Ausführungen beschränkt zu sein.

## Beispiel 1

Eine durch Verstreckung vergütete und fixierte Polyesterfolie von 36 μm Dicke, die durch längere Lagerung auf dem Wickel mit zahlreichen Verdehnungen und Druckstellen behaftet war, wurde mit leichter Spannung über eine beheizbare Walze geführt. Während des Versuchs wurde die Walzentemperatur kontinuierlich erhöht. Unter 100 °C konnte keine Veränderung der Folienstruktur beobachtet werden. Knapp oberhalb 100 °C wurde die Folie auf der Heizwalze glatt, die Verprägungen und Druckstellen verschwanden. Die beim Ablaufen der heißen Bahn von der Walze entstandenen Zugfalten (Fischgrätmuster), wurden jedoch beim Abkühlen fixiert. Die Folie hatte somit eine - schlechte Qualität.

## Beispiel 2

Eine beim Lagern auf dem Wickel stark verformte Polyesterfolie von 36 μm Dicke wurde um eine beheizbare Trommel geführt, die mit einer Heißluft-und einer Kaltluftstrecke umfaßt war. Die Temperatur der Trommeloberfläche wurde auf ca. 95 bis 100 °C und die Temperatur der Heißluft auf 110 °C eingestellt. Hinter der Heißluftzone wurde die Folie noch auf der Trommel aufliegend durch die Kaltluftzone geführt.

Es wurde folgendes Ergebnis gefunden: In der Folienbahn bilden sich beim Auflaufen auf die ca. 100 °C heiße Trommel Falten, weil sich die - schockartig aufgeheizte Folie ausdehnte, aber auf der Trommeloberfläche nicht rutschen konnte.

## Beispiel 3

Es wurde verfahren wie in Beispiel 2, aber vor der Trommel wurde eine beheizbare Umlenkwalze angeordnet. Diese Vorheizwalze wurde so vor die Trommel gesetzt, daß die Übergangsstrecke der Folienbahn zwischen Umlenkwalze und Trommel ca. 10 bis 15 cm betrug. Ihre Temperatur wurde auf 75 bis 80 °C gebracht, die übrigen Bedingungen blieben wie im Beispiel 2.

Es wurde folgendes Ergebnis gefunden:

1. Bei Verweilzeiten unter der Heißluftzone, die kürzer als 3 sec waren, konnte keine oder nur nicht ausreichende Glättung der Folie beobachtet werden.

2. Bei Verweilzeiten zwischen ca. 3 und 5 sec war die Folie sehr gut geglättet.

3. Bei Verweilzeiten über 5 sec traten wieder Zugfalten (Fischgrätmuster) auf.

## Beispiel 4

Unter Verwendung der gleichen Vorrichtung wie in Beispiel 3 wurde eine Folie aus Hochdruckpolyethylen von 35 μm Dicke bearbeitet.

Die Temperaturbedingungen wurden wie folgt eingestellt:

Vorheizwalze leicht über Zimmertemperatur bis 50 °C

Trommel etwa 60 °C

Heizzone etwa 70 °C

Kühlzone etwa 22 °C

Die Versuchsergebnisse entsprachen denen von Beispiel 3.

Beispiel 5

Je eine Polyesterfolie von 36 $\mu$m Dicke und eine Hochdruckpolyethylenfolie von 35 $\mu$m Dicke wurden berührungsfrei über ein Tragrohr, das mit Schlitzen versehen war, geführt.

Bei der Polyesterfolie wurden folgende Temperaturen eingestellt:

Vorheizwalze 74 bis 80 °C

Heizzone

     a) Düse 130 °C

     b) Heißluft: Segment 1    130 °C Kühlzone ca. 22 °C

Bei der Polyethylenfolie wurden folgende Temperaturen eingestellt:

Vorheizwalze ca. 40 °C

Heizzone

     a) Düse 75 °C

     b) Heißluft: Segment 1    75 °C Kühlzone ca. 22 °C

Die erhaltenen Folien waren weitgehend frei von Unregelmäßigkeiten und zeigten auch bei längerer Lagerung bei leicht erhöhten Temperaturen keine Dimensionsänderungen.

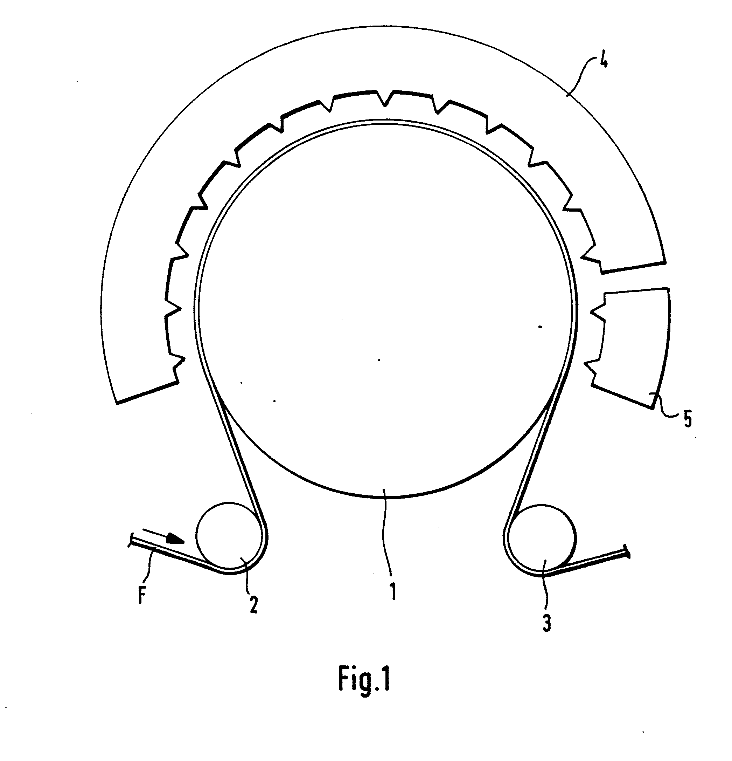

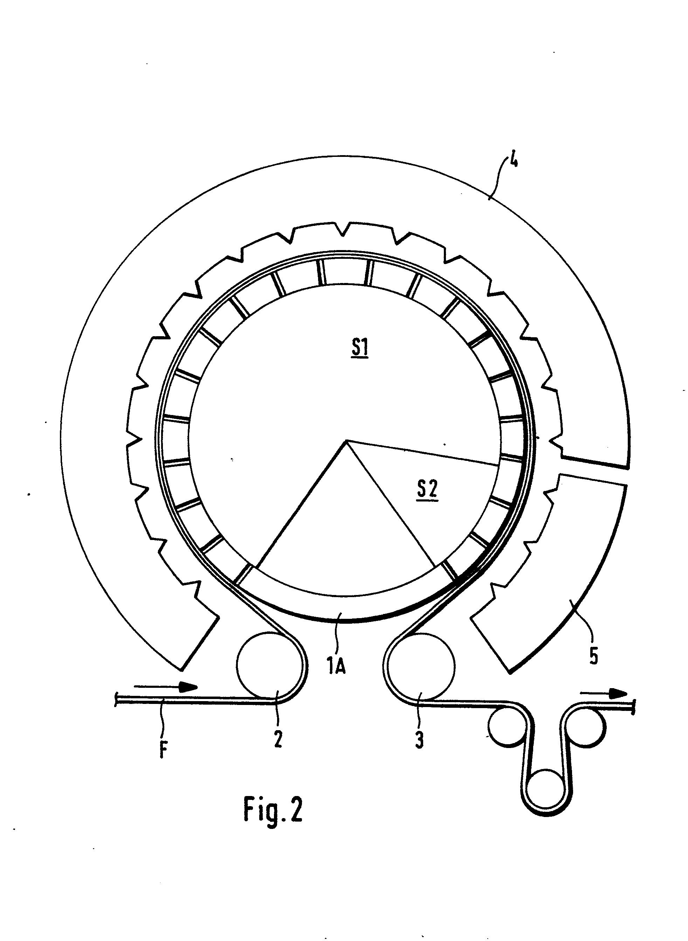

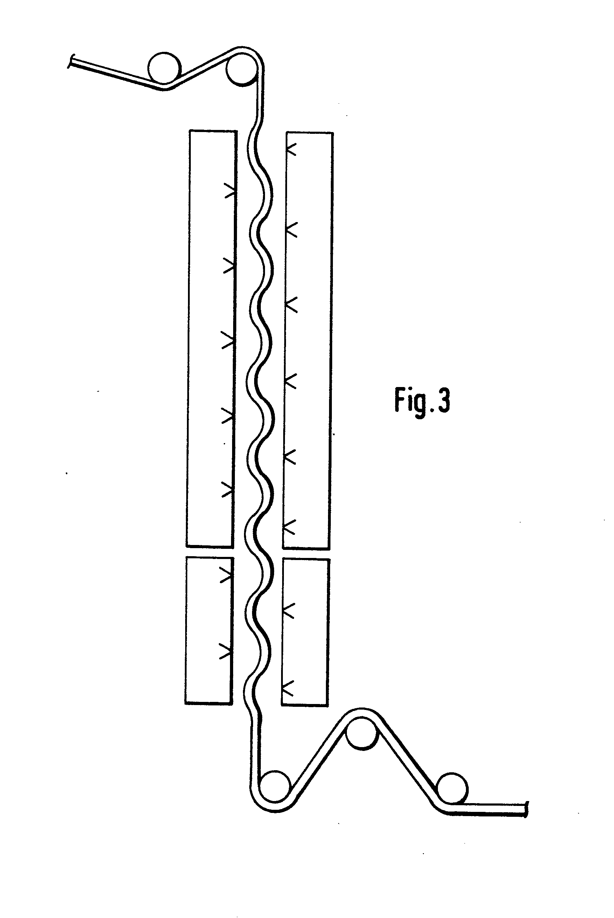

Die folgenden Abbildungen 1 bis 3 zeigen - schematisch im Querschnitt zwei Ausführungsformen einer für das Verfahren geeigneten Vorrichtung, ohne daß auch hier eine Einschränkung auf die dargestellten Vorrichtungen bestehen soll.

Bezeichnung der Vorrichtungsteile

1 heizbare, drehbare Trommel

1A feststehendes Tragrohr mit Öffnungen

2 heizbare Umlenkwalze

3 gegebenenfalls kühlbare Umlenkwalze

4 Heizeinrichtung

5 Kühleinrichtung

F Folie

Abbildung 1 zeigt die Folie F, die in einem Umschlingungswinkel, der durch die Walzen 2 und 3 gegeben ist, über die drehbare Trommel 1 geführt wird. Die Trommel 1 ist auf die Temperatur $t_2$ und die Vorheizwalze 2 auf die Temperatur $t_1$ aufgeheizt.

Über der Trommel 1 sind die Heizeinrichtung 4 und die Kühleinrichtung 5 (hier beide schematisch als Düsenaggregat dargestellt) angeordnet.

Die Heizeinrichtung wird mit der Temperatur $t_3$ und die Kühleinrichtung mit der Temperatur $t_4$ betrieben.

Abbildung 2 zeigt die gleiche Vorrichtung wie in Abbildung 1, jedoch wird hier ein mit Öffnungen versehenes, feststehendes Tragrohr 1A verwendet. Das Tragrohr ist in die Segmente S1 zur Aufnahme von Heißgas und S2 für die Aufnahme von Kühlgas eingeteilt.

Wie erkennbar, sind die Einrichtungen 4 und 5 weitgehend in dem Bereich der Segmente S1 und S2 angeordnet.

Abbildung 3 zeigt die Folie F, die über die auf die Temperatur $t_1$ aufgeheizte Walze 2 und senkrecht durch die Heizeinrichtung 4 und die Kühleinrichtung 5 geführt wird, bevor sie auf die Walze 3 aufläuft. Die Heiz-und Kühleinrichtungen sind als Düsenaggregate dargestellt.

Die Einrichtungen zum Beheizen bzw. zur Zu- und Abführung von Heiß-oder Kaltgasen sind in den Abbildungen nicht mit eingezeichnet, da sie keine erfindungswesentlichen Teile darstellen.

Ansprüche

1. Verfahren zur Vergleichmäßigung und/oder Dimensionsstabilisierung einer thermoplastischen Folienbahn nach deren Herstellung und/oder Lagerung, dadurch gekennzeichnet, daß man die Folienbahn durch eine Vorwärmzone mit der Temperatur $t_1$, dann durch eine Heizzone mit den Temperaturen $t_2$ und $t_3$ und anschließend durch eine Abkühlzone mit der Temperatur $t_4$ führt, wobei man die Temperaturbedingungen derart einstellt, daß $t_1 \leq t_2$ und $t_3$; $t_3 \geq t_2$ und $t_4 \leq t_2$ und $t_3$ ist, wobei $t_2$ und $t_3$ bei der Vergleichmäßigung in der Nähe ($\pm$ 10 °C) des Erweichungspunktes $t_9$ des Folienmaterials liegen und bei der Dimensionsstabilisierung $t_3$ 20 bis 70 °C $\geq t_2$ gehalten wird und eine Verweilzeit in der Heizzone $t_2$, $t_3$ von 1 bis 30 sec eingehalten wird.

2. Vorrichtung zur Durchführung des Verfahrens, bestehend aus einer drehbaren Führungstrommel (1) oder einem Schlitze und/oder Löcher aufweisenden feststehenden Tragrohr (1A) sowie Umlenkwalzen (2) und (3) für die Folie (F), dadurch gekennzeichnet, daß die Führungstrommel (1) beheizbar und die Walze (2) als Heizwalze ausgebildet ist und oberhalb der Walze eine Einrichtung (4) zum Heizen und, in Laufrichtung der Folie gesehen, nachgeschaltet eine Einrichtung (5) zum Kühlen vorhanden ist.

3. Vorrichtung nach Anspruch 2, dadurch gekennzeichnet, daß die Einrichtung (4) aus einer Düsenanordnung für einen Heißgasstrom und die Einrichtung (5) aus einer Düsenanordnung für einen Kaltgasstrom besteht.

4. Vorrichtung nach Anspruch 3, dadurch gekennzeichnet, daß die Einrichtung (4) aus wenigstens einem IR-Strahler besteht.

5. Vorrichtung nach einem der Ansprüche 1 bis 4, dadurch gekennzeichnet, daß bei Anwendung eines segmentierten Tragrohrs das größere Segment (S1) mit Mitteln zum Einbringen von Heißluft und das kleinere Segment (S2) mit Mitteln zum Einbringen von Kaltluft verbunden ist.

6. Vorrichtung nach Anspruch 5, dadurch gekennzeichnet, daß die Einrichtung (4) direkt über dem Segment (S1) und die Einrichtung (5) direkt über dem Segment (S2) angebracht ist.

7. Vorrichtung zur Durchführung des Verfahrens nach Anspruch 1, bestehend aus Düsenaggregaten (4) und (5) sowie Führungswalzen (2) und (3) für die Folie (F), dadurch gekennzeichnet, daß das Düsenaggregat (4) mit Heißgas und das Düsenaggregat (5) mit Kühlgas gespeist wird und beide Aggregate gestreckt angeordnet sind.

8. Vorrichtung nach Anspruch 7, dadurch gekennzeichnet, daß in dem Düsenaggregat (4) zusätzlich noch IR-Strahler angeordnet sind.

9. Vorrichtung nach einem der Ansprüche 1 bis 8, dadurch gekennzeichnet, daß über der Vorheizwalze (2) noch zusätzlich eine Düsenanordnung für einen Heißgasstrom oder wenigstens ein IR-Strahler angeordnet ist.

10. Vorrichtung nach einem der Ansprüche 1 bis 9, dadurch gekennzeichnet, daß die Walze (3) als Kühlwalze ausgebildet ist.

Fig.1

Fig.2

Fig.3